**Europäisches Patentamt**

**European Patent Office**

**Office européen des brevets**

(19)

(11) Veröffentlichungsnummer : **0 333 031 B1**

(12)

# EUROPÄISCHE PATENTSCHRIFT

(45) Veröffentlichungstag der Patentschrift :
**08.07.92 Patentblatt 92/28**

(51) Int. Cl.⁵ : **B01J 2/26,** B01J 2/22,
B29C 67/08

(21) Anmeldenummer : **89104184.0**

(22) Anmeldetag : **09.03.89**

(54) **Verfahren und Anlage zum Herstellen von Dekorgranulaten sowie Verwendung dieser Granulate.**

(30) Priorität : **12.03.88 DE 3808295**

(43) Veröffentlichungstag der Anmeldung :
**20.09.89 Patentblatt 89/38**

(45) Bekanntmachung des Hinweises auf die
Patenterteilung :
**08.07.92 Patentblatt 92/28**

(84) Benannte Vertragsstaaten :
**BE CH DE ES FR GB GR IT LI NL SE**

(56) Entgegenhaltungen :
**FR-A- 1 298 090
FR-A- 2 084 749
US-A- 4 537 647
PATENT ABSTRACTS OF JAPAN, Band 6, Nr.
263 (M-181)[1141], 22. Dezember 1982;**

(73) Patentinhaber : **MARBURGER
TAPETENFABRIK J.B. SCHAEFER GMBH &
CO. KG
Bertram-Schaefer-Strasse 11
W-3575 Kirchhain 1 (DE)**

(72) Erfinder : **Petridis, Dimitrios
Röthe Strasse 27
W-3575 Kirchhain (DE)**

(74) Vertreter : **Dr. Fuchs, Dr. Luderschmidt
Dipl.-Phys. Seids, Dr. Mehler Patentanwälte
Abraham-Lincoln-Strasse 7
W-6200 Wiesbaden (DE)**

**Beschreibung**

Die Erfindung betrifft ein Verfahren und eine Anlage zur Herstellung von Dekorgranulaten, bei welcher eine pastöse Masse in kleine Mengenportionen aufgeteilt und diese thermisch verfestigt werden.

Zum Gestalten von Oberflächen, insbesondere von Wandbelagsmaterialien, werden nach Bedarf Dekorgranulate verwendet, die je nach Materialeigenschaften unter Einsatz eines Bindemittels oder beispielsweise durch Thermoplastifizierung gleichmäßig oder in wechselnden Mengen mit der Oberfläche verbunden werden, um dieser eine gewisse Struktur bzw. ein gewisses Erscheinungsbild zu verleihen.

Als Ausgangsmaterial für solche Granulate kommen Kunststoffe unterschiedlicher Art zur Anwendung. Die Granulate lassen sich beispielsweise dadurch herstellen, daß ein Kunststoff zu genügend dünnen Strängen extrudiert, gekühlt und zu Granulen zerschnitten wird. Kunststoffteile können auch zerhackt, gemahlen und anschließend fraktioniert werden.

Dem patent Abstracts of Japan, Band 6, Nr. 263 (M-181) [1141], 22. Dezember 1982; & JP-A-57 156 213 (FUKUBI KAGAKU KOGYO K.K.) 27-09-1982 ist ein Verfahren zu entnehmen, mit dem ein aufschäumbarer Reliefdruck auf ein Kunststoffsubstrat aufgetragen wird, unmittelbar nachdem dieses Substrat den Extruder für seine Herstellung verlassen hat, um die Wärme des Substrates unmittelbar für das Schäumen und Trocknen des Reliefdruckes auszunutzen. Verwendet für den Auftrag des Druckes wird ein Siebdruckzylinder, der zusammen mit einer Gegenwalze einen Walzenspalt bildet, durch den das Substrat läuft, wobei aus dem Inneren des Siebdruckzylinders mittels eines Rakels die Auftragsmasse durch die Strukturöffnungen des Siebdruckzylinders hindurch auf das Substrat aufgebracht wird. Dieser Druckschrift ist keinerlei Anregung zu entnehmen, das aufgebrachte Druckbild etwa wieder vom Substrat abzulösen, um aus ihm diskrete Einzelteile zu erzeugen, die in anderer Verteilung wieder auf ein anderes Substrat aufgebracht werden könnten. Die dieser Druckschrift entnehmbare Lehre vermittelt vielmehr die Zielsetzung, möglichst einen einheitlichen, dimensionsstabilen Körper aus Substrat und Reliefdruck zu erzeugen.

Der Erfindung liegt die Aufgabe zugrunde, ein Verfahren zur wirtschaftlichen Herstellung von Dekorgranulat aufzuzeigen, mit dem es möglich ist, Granulen sehr eng begrenzter Größe oder aber Granulen einer gewollten Größenverteilung herzustellen, und mit dem es insbesondere auch möglich ist, Granulen ganz bestimmter Umfangsgestalt zu erzeugen, die vorzugsweise einen flächigen Charakter aufweisen.

Wenn im Zusammenhang mit dieser Beschreibung von Granulen als Teilchen eines Granulates gesprochen wird, so sind die Begriffe Granule und Granulat nicht auf Teilchen begrenzt, die entweder eine unregelmäßige räumliche Ausdehnung aufweisen oder etwa ähnlich große Ausdehnung in allen drei Raumrichtungen, wie dies bei gekörnten Materialien der Fall ist, sondern die Begriffe sollen Teilchen beliebiger Gestalt umfassen, wozu insbesondere auch flache, plättchenförmige Teilchen rechnen sollen, die in ihrer Flächenausdehnung Abmessungen bis in die Größenordnung von 1 cm und auch darüber aufweisen können.

Die genannte Aufgabe wird durch ein Verfahren gelöst, das in seiner Grundkonzeption darin besteht, daß eine pastöse Masse mittels einer Druckschablone oder Druckform in in sich abgegrenzten, voneinander getrennten, diskreten Flächenbereichen auf eine Trägerfläche aufgetragen wird, auf der sie dann durch Wärmeeinwirkung zumindest teilverfestigt wird, so daß sich die entstandenen Flächenteilchen von der Trägerfläche anschließend abstreifen oder abschaben lassen.

Wenn in diesem Zusammenhang von einer Druckschablone oder Druckform gesprochen wird, so muß es sich dabei um ein Druckverfahren handeln, welches auch einen ausreichend dicken Auftrag der Masse auf die Trägerfläche zuläßt. Hier könnte das Tiefdruckverfahren zur Anwendung gelangen, insofern sich die verwendete Masse aus entsprechend dimensionierten Formvertiefungen lösen und auf die Trägerfläche übertragen läßt.

In besonders bevorzugter Ausführung des Verfahrens findet jedoch das Siebdruckverfahren Anwendung, und zwar als kontinuierliches Auftragsverfahren, bei dem die aufzutragende Masse aus dem Inneren eines rotierenden Siebformzylinders auf die an diesem entlangbewegte Trägerfläche übertragen wird. Diese Trägerfläche kann ein rotierender Zylinder oder aber auch ein fortlaufendes Band sein, welches an der Auftragsstelle für die Masse erforderlichenfalls von einer Gegendruckwalze unterstützt ist.

Unter einer pastösen Masse soll im vorliegenden Zusammenhang u.a. Flüssigkeiten, Dispersionen und Suspensionen verstanden werden, mit denen es nach dem gewählten Druckverfahren möglich ist, Mengen auf die Trägerfläche zu übertragen, die zu Granulen ausreichender Dicke bzw. Masse führen. Die pastöse Masse soll jedenfalls nicht so dünnflüssig sein, daß sie auf der Trägerfläche verläuft und die Grenzen zwischen den diskreten Auftragsbereichen beseitigt.

In erster Linie kommen hier Plastisole, d.h. PVC-Pasten mit unterschiedlichem Weichmacheranteil in Frage. Es sind aber auch wasserverdünnbare Kunststoffdispersionspasten verwendbar, denen durch einen hohen Füllstoffanteil die erforderliche Viskosität verliehen wird. Ferner können Pasten auf Silikatbasis bzw. Silikatdispersionsbasis geeignet sein. Erwähnt sei der Einsatz von Natriumsilikat (Wasserglas). Weiterhin können wasserverdünnbare Dispersionsschaumpasten, beispielsweise Acrylatschaumpasten, geeignet sein.

Die Rotationssiebdruckschablonen bei dem bevorzugt einzusetzenden Siebdruckverfahren können auf bekannte Weise als Lackschablonen, Galvanoschablonen oder Kunststoffrotationsschablonen ausgebildet sein. Durch die Dicke des Schablonenmaterials kann die Auftragsdicke der pastösen Masse mit beeinflußt werden. Die Druckschablone wird nach bekannten Verfahren hergestellt, und zwar mit Durchbrüchen bzw. Öffnungen, die auf die Gestalt und Größe der herzustellenden Granulatteilchen abgestimmt sind. So kann die Druckschablone beispielsweise quadratische Durchbrüche mit 2 mm Kantenlänge aufweisen, die durch undurchlässige Stege von 1 mm voneinander getrennt sind. Wie leicht einzusehen ist, lassen sich bei entsprechend ausgebildeter Schablone Granulen unterschiedlicher Größe und Gestalt herstellen, wie beispielsweise Kreisflächen, Sterne, Stäbchen und dergl..

Nach Auftrag auf die Trägerfläche wird die pastöse Masse durch Wärmeeinwirkung zumindestens teilverfestigt. Diese Verfestigung kann in einem chemischen Aushärten, einem Gelieren oder einfach in einem Trocknen bestehen. Erforderlichenfalls werden die auf der Trägerfläche befindlichen, ausgehärteten Teilchen gekühlt, bevor sie von der Trägerfläche abgestreift werden.

Bei einer besonderen Variante des erfindungsgemäßen Verfahrens werden die Granulatteilchen, noch während sie sich auf der Trägerfläche befinden, mit einem Oberflächendruck versehen. Der Druckauftrag findet zweckmäßigerweise im Tiefdruck, Flexodruck oder Siebdruck statt. Je nachdem worin der Auftrag besteht, kann es zweckmäßig sein, die Granulatteilchen vor dem Bedrucken nur vorzutrocknen oder vorzugelieren. Durch das Bedrucken kann die Oberflächengestaltung der Teilchen in einem weiten Bereich variiert werden. So ist es beispielsweise möglich, die Teilchen mit einem flächigen Farbdruck zu versehen, mit Metallfarben zu überziehen oder ihrerseits wieder mit einem Auftrag zu beschichten, der bei weiterer Wärmeeinwirkung aufschäumt oder dergl..

Nach dem Druckvorgang kann es erforderich sein, die Teilchen auf der Trägerfläche erneut zu trocknen bzw. weiter auszuhärten und gegebenenfalls zu kühlen, bevor sie von der Trägerfläche endgültig abgeschabt werden.

In einer speziellen Verfahrensvariante können der pastösen Masse bereits Treibmittel zugefügt sein, die ein Aufschäumen der Masse bei bestimmten Temperaturen bewirken. Hierfür eignen sich insbesondere die Plastisole. Je nach Verfahrensführung kann die Masse bereits auf der Trägerfläche ausgeschäumt werden. Ist ein Bedruckvorgang für die Oberfläche der Teilchen vorgesehen, kann das Ausschäumen wahlweise vor dem Bedrucken oder nach dem Bedrucken erfolgen, wodurch sich unterschiedliche Oberflächeneffekte erreichen lassen. Während bei der Verwendung kompakter Massen Granulen von verhältnismäßig genau definierter Gestalt erhalten werden, führt das Aufschäumen dazu, daß die Teilchen ihre genau definierte flächige Gestalt verlieren und ein unregelmäßigeres Aussehen erhalten.

Es ist auch möglich, bei entsprechend niedriger Temperaturführung aus einer ein Treibmittel enthaltenden Masse Granulen herzustellen, die noch nicht ausgeschäumt sind, so daß sie erst bei der weiteren Verarbeitung, beispielsweise nach dem Auftrag auf ein Tapetenrohmaterial aufgeschäumt werden können.

Zur Durchführung dieser Verfahrensvarianten ist es zweckmäßig, wenn sich die Heizeinrichtungen der für die Herstellung der Granulen verwendeten Anlage in einem weiten Temperaturbereich, vorzugsweise in einem Bereich zwischen etwa 50 und 250°C regeln lassen. Bei Zylindern kann es zweckmäßig sein, sie wahlweise beheizen oder kühlen zu können.

Geeignete Vorrichtungen oder Anlagen zum Ausführen des beschriebenen Verfahrens können verschiedene Varianten aufweisen. Grundelement ist ein Rotationsdruckwerk, vorzugsweise ein Rotationssiebdruckzylinder, der an einer fortbewegten Trägerfläche abrollt. Diese Trägerfläche kann die Oberfläche eines rotierenden Zylinders sein, der gleichzeitig als Gegendruckwalze für das Druckwerk dient, sie kann aber auch die Oberfläche eines fortlaufenden Bandes sein, welches an dem Siebdruckzylinder entlangläuft, und welches im Bereich des Druckzylinders im allgemeinen durch eine meist elastische Gegendruckwalze unterstützt ist.

Die pastöse Masse wird, wie im Siebdruckverfahren bekannt, in das Innere des Siebdruckzylinders geleitet, in dem ein Abstreifer angeordnet ist, der die Masse beim Rotieren des Druckzylinders durch dessen Umfangsöffnungen auf die Trägerfläche drückt.

Für den Fall, daß die Trägerfläche die Oberfläche eines Zylinders ist, ist der Zylinder so groß zu wählen, daß alle anschließenden Verfahrensmaßnahmen bis zum Abstreifen des Granulates von der Zylinderoberfläche im Bereich des Zylinderumfangs ausgeführt werden können. Je nach Verfahrensablauf und Vielseitigkeit der Anlage kann der Zylinder im Inneren mit einer Beheiz- und Kühleinrichtung versehen sein, so daß sich seine Temperatur zwischen 0° und 250°C einstellen bzw. regeln läßt. Im Anschluß an das Druckwerk ist am Zylinderumfang eine Heizhaube angeordnet, die beispielsweise als Heißluft-Konvektionshaube oder als Wärmestrahlereinrichtung ausgebildet sein kann. An der gegenüberliegenden Seite des Zylinders, kurz vor der Abstreifeinrichtung für das Granulat, wird zweckmäßigerweise eine Kühlhaube vorgesehen.

Die Trägerfläche, nämlich die Oberfläche des Zylinders, muß derart beschaffen sein, daß die pastöse Masse nach dem Aufdruck einerseits gut an der Trägerfläche haftet, sich andererseits nach Verfestigen der Teilchen aber auch wieder mühelos von der Trägerfläche entfernen läßt. Die Zylindermantelfläche soll daher auf jeden Fall poliert, besser jedoch noch zusätzlich verchromt oder vernickelt sein. Sie kann auch mit einem Polytetrafluorethylenüberzug versehen sein.

Wird ein fortlaufendes Band als Trägerfläche für die pastöse Masse verwendet, kann die Anordnung im übrigen ähnlich sein wie vorstehend für die reine Zylinderausführung beschrieben. Zwar wäre es möglich, die Siebdruckwalze gegen das unmittelbar am Zylinder anliegende Band arbeiten zu lassen, man wird im Druckbereich jedoch im allgemeinen das Band vom Zylinder wegführen und, wie oben bereits erwähnt, durch eine besondere Gegendruckwalze unterstützen. Die Variante mit Band bietet den Vorteil, daß nicht alle Verfahrensmaßnahmen am Zylinderumfang aufgeführt werden müssen. Nach gewisser Umschlingung des Zylinders kann das Band beispielsweise zusätzlich noch um ein oder mehrere Kühlwalzen geführt werden, von deren letzter das Granulat dann abgerakelt wird.

Es ist möglich, ein endlos umlaufendes Band zu verwenden, ebenso aber auch ein endliches Band, für das dann eine Abwickeleinrichtung und eine Aufwickeleinrichtung vorgesehen sein müssen. Die Rolle mit dem benutzten Band kann nach Durchlauf des Bandes wieder in die Abwickelvorrichtung umgehängt und erneut eingesetzt werden. Um die Oberflächenanforderungen zu erfüllen, sind die Bänder zweckmäßigerweise mit einer Silikonoberfläche oder einer Oberfläche aus Polytetrafluorethylen versehen. Silikonpapier kann beispielsweise verwendet werden, wenn mit nicht endlosem Band gearbeitet wird.

Das Arbeiten mit einem Trägerband ermöglicht es, auf einen rotierenden Zylinder zu verzichten. Die Anlage kann hinter dem Druckwerk beispielsweise einen Heizkanal aufweisen, durch den das mit der Masse versehene Band gradlinig hindurchgeführt wird. Hinter dem Heizkanal kann eine Kühlhaube angeordnet sein.

Sollen die auf der Trägerfläche vorverfestigten Granulatteilchen auch noch mit einem Oberflächendruck versehen werden können, weist die Anlage hinter der ersten Beheiz- und ggf. Kühleinrichtung ein Druckwerk auf, an das sich eine Nachbeheizeinrichtung und eventuell eine Nachkühleinrichtung anschließen. Grundsätzlich wäre es möglich, alle diese Operationen am Umfang eines entsprechend großen Zylinders auszuführen, für eine erweiterte Anlage der erwähnten Art ist die Ausführung mit fortlaufendem Band jedoch flexibler. So kann beispielsweise das Band für das erste Beheizen und Kühlen um einen Zylinder, dann durch ein separates Druckwerk und anschließend Nachheizkanal geführt werden, bevor es um eine Kühlwalze geleitet wird, an der das Granulat mittels einer Rakel abgestreift wird.

Falls erwünscht, lassen sich die beschriebenen Anlagenelemente auch in anderer Weise zweckmäßig miteinander kombinieren.

Das nach dem beschriebenen Verfahren hergestellte Dekorgranulat, welches in unterschiedlichsten Varianten und mit unterschiedlichstem äußeren Erscheinungsbild erzeugt werden kann, läßt sich bevorzugt bei der Fabrikation von Wandbelägen mit strukturierter Oberfläche, insbesondere von Strukturtapeten verwenden. Die Verwendung des Granulats soll jedoch nicht auf diesen Einsatz zweckbeschränkt sein. Es sind vielmehr weitere Anwendungen für das Granulat denkbar.

Je nach Auswahl der Ausgangsmasse lassen sich Granulen herstellen, die kompakt oder aufgeschäumt sind, transparent oder opak, farblos, weiß oder buntfarbig sowie metallfarbig oder glitterhaltig. Je nach Weichmacheranteil können die Teilchen weicher oder härter ausgeführt werden.

Im folgenden wird die Erfindung unter Hinweis auf die beigefügten Zeichnungen noch näher erläutert. Es zeigen:

Fig. 1 eine schematische Darstellung einer Anlage in einer ersten Ausführungsform zum Herstellen von Dekorgranulat,

Fig. 2 eine weitere Ausführungsform einer Anlage und

Fig. 3 eine dritte Ausführungsform einer Anlage, in der ein zusätzliches Druckwerk zum Bedrucken der Oberfläche der Granulatteilchen vorgesehen ist.

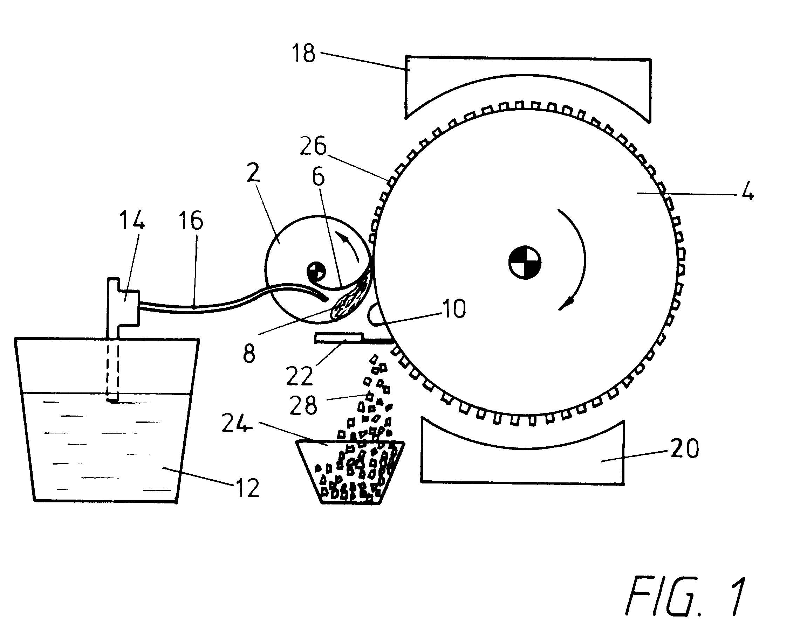

Die in Fig. 1 schematisch dargestellte Anlage zum Erzeugen von Dekorgranulat weist einen Rotationssiebdruckzylinder 2 auf, der in Abrollkontakt mit einem größeren Stahlzylinder 4 steht. Beide Zylinder sind drehbar in einem (nicht dargestellten) Maschinengestell gelagert, und es ist zweckmäßigerweise der Stahlzylinder, der mit einem Rotationsantrieb versehen ist. Innerhalb der Siebdruckschablone 2 ist eine Siebdruckrakel 6 angeordnet, welche die am Innenumfang der Siebdruckschablone, und bei Rotation dieser Schablone sich in den Rakelspalt bewegende pastöse Auftragsmasse 8 entsprechend dem in der Siebdruckschablone vorgesehenen Fenstermuster auf die Oberfläche 10 des Zylinders als Trägerfläche überträgt. Die Auftragsmasse 8 wird dem Siebdruckzylinder 2 aus einem Vorratsbehälter 12 über eine Pumpe 14 und eine Leitung 16 zugeführt.

Der Zylinder 4 enthält zweckmäßigerweise eine (nicht dargestellte) Beheiz- und Kühleinrichtung, mit der es möglich ist, die Zylindertemperatur in Grenzen zwischen 0° und entweder 250°C zu variieren. Oberhalb des Zylinders 4 ist, dessen Umfang über einen bestimmten Winkelbereich überdeckend, eine Oberflächenbeheizeinrichtung 18 angeordnet, die beispielsweise als Heißlufthaube oder aber auch als eine Infrarotstrahlergruppe ausgebildet sein kann. Die zweckmäßigste Ausführung hängt mit von der Art der zu verarbeitenden Masse ab. Die Heizeinrichtung 18 kann auch Heizelemente unterschiedlicher Art in Kombination enthalten. An der Unterseite des Zylinders 4, der Heizeinrichtung 18 gegenüberliegend, ist eine Kühllufthaube 20 angeordnet, mit der Kühlluft auf die Oberfläche des Zylinders geblasen werden kann. In Drehrichtung des Zylinders 4 gesehen kurz vor dem Siebdruckzylinder 2 ist schließlich eine Abstreifrakel 22 über einem Auffangbehälter 24 angeordnet.

Mittels des Siebdruckzylinders 2 und der Siebdruckrakel 6 wird die pastöse Masse 8 in Form von diskreten Flächenbereichen, also in sich abgeschlossenen Mengenportionen 26, wie sie hinter dem Druckwerk dargestellt sind, auf die Trägerfläche 10 des Zylinders 4 aufgetragen. Im Ausführungsbeispiel ist der Zylinder 4 von innen her leicht gekühlt, während von außen die Beheizeinrichtung 18 den Massenteilchen Wärmeenergie zuführt, wodurch diese je nach Art der Masse verfestigt, getrocknet, geliert oder auch aufgeschäumt werden. Nach Durchlaufen der Kühlhaube 20 werden die Massenteilchen 26 nunmehr als Granulat 28 mittels der Rakel 22 von der Zylinderoberfläche 10 abgestreift und fallen in den Auffangbehälter 24, von wo sie einer weiteren Verwendung zugeführt werden können.

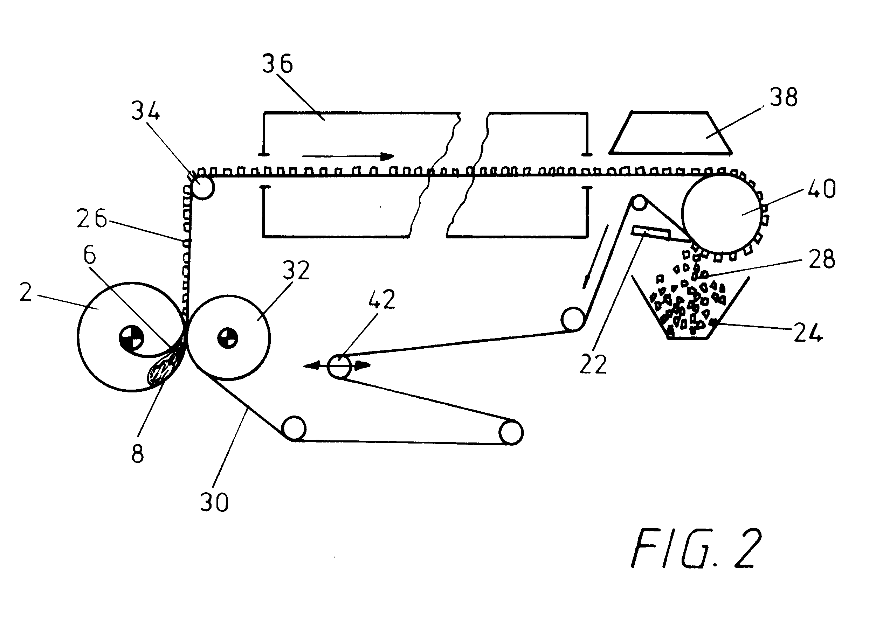

In Fig. 2 ist eine Variante einer Anlage dargestellt, bei der der Ausführung nach Fig. 1 entsprechende Teile mit gleichen Bezugsziffern bezeichnet sind. Die Anlage nach Fig. 2 unterscheidet sich von derjenigen gemäß Fig. 1 im wesentlichen dadurch, daß der Zylinder 4 durch ein endlos umlaufendes Band 30 ersetzt ist, welches die Trägerfläche für das herzustellende Granulat bildet. Da der Zylinder 4 als Gegendruckwalze für den Siebdruckzylinder entfällt, ist bei der Anlage nach Fig. 2 eine Gegendruckwalze 32 für den Siebdruckzylinder 2 vorgesehen. Das endlose Band 30 durchläuft das Siebdruckwerk im wesentlichen senkrecht nach oben, wird dann durch eine Leitwalze 34 in die Horizontalrichtung umgelenkt und durchläuft einen Heizkanal 36. An den Heizkanal 36 schließt sich schließlich eine Luftkühlhaube 38 an und das Band umschlingt dann eine Kühlwalze 40, an welcher die Rakel 22 zum Abschaben des fertigen Granulates 28 angeordnet ist. Von der Kühlwalze 40 wird das Band 30 über verschiedene Leitwalzen, unter denen sich zweckmäßigerweise auch eine Spannwalze 42 befindet, zum Siebdruckzylinder 6 zurückgeleitet.

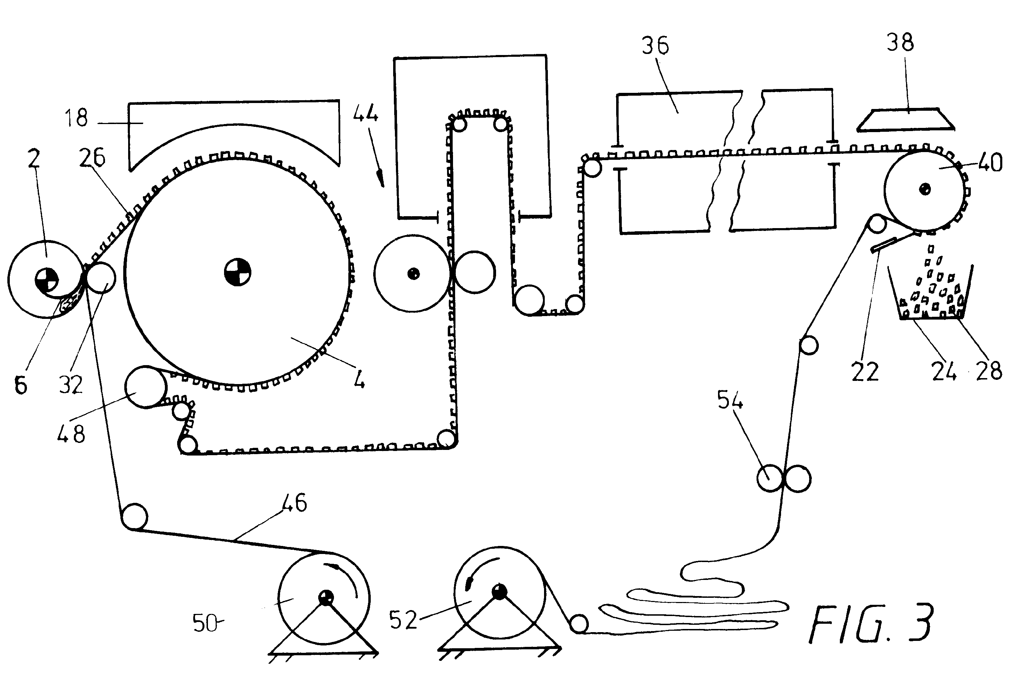

In Fig. 3 ist schematisch eine Anlage dargestellt, die zusätzlich ein Druckwerk 44 der auf dem fortlaufenden Band 46 befindlichen Masseteilchen 26 aufweist. Die Anlage stellt mehr oder weniger eine Kombination der Anlagen nach den Fig. 1 und 2 dar, wobei das Druckwerk 44 dazwischen angeordnet ist. Es ist auch hier hinter dem Siebdruckzylinder 2 ein großer Stahlzylinder 4 vorgesehen, der jedoch in diesem Fall von dem endlosen Band 46 umschlungen ist, weswegen die Siebdruckwalze 2 nicht unmittelbar am Zylinder anliegt, sondern etwas seitlich davon angeordnet und mit einer eigenen Gegendruckwalze 32 versehen ist. Anstelle der Kühlhaube 20 der Ausführungsform gemäß Fig. 1 ist bei dieser Ausführungsform eine Kühlwalze 48 vorgesehen, die von dem Band 46 nach Verlassen des Zylinders 4 umschlungen wird. Das Band mit den Masseteilchen 26 durchläuft anschließend das Druckwerk 44, welches nach dem Tiefdruckverfahren, Flexodruckverfahren oder Siebdruckverfahren arbeiten kann. Mit diesem Druckwerk wird die Oberfläche der Teilchen 26 zusätzlich mit einem Dekordruck versehen. Anschließend an das Druckwerk 44 durchläuft das Band 46, ähnlich wie in der Ausführungsform gemäß Fig. 2, zuerst einen Heizkanal 36, dann eine Luftkühlhaube 38 und wird schließlich um eine Kühlwalze 40 geführt, an der das fertige Granulat 28 vom Band 46 abgerakelt wird.

Im Gegensatz zur Ausführungsform nach Fig. 2 wird bei der Ausführungsform nach Fig. 3 jedoch kein endlos umlaufendes Band sondern ein endliches Trägerband 46 verwendet, welches aus Silikonpapier besteht. Das Band 46 läuft von einer in einem Abrollstand 50 hängenden Rolle ab und wird nach Durchlaufen der Anlage in einem Aufrollstand 52 wieder aufgerollt. Das Band kann wiederverwendet werden. Um den Aufrollvorgang von den Bandzugverhältnissen in der Anlage im wesentlichen unabhängig zu machen, befindet sich am Ende der Anlage ein Zugwalzenpaar 54, welches dem Band die für den Durchlauf der Anlage erforderliche Abzugsspannung erteilt. Hinter dem Zugwalzenpaar 54 wird das Band vorerst lose abgelegt, bevor es mittels des Aufrollstandes 52 aufgewickelt wird.

## Patentansprüche

1. Verfahren zum Herstellen von Dekorgranulaten, dadurch gekennzeichnet, daß eine pastöse Masse (8) mittels einer Druckform (2) in diskreten Flächenbereichen (26) auf eine Trägerfläche (10) aufgetragen, die Masse (26) auf dieser Trägerfläche durch Einwirkung von Wärmeenergie zumindest teilweise verfestigt und als Granulat (28) von der Trägerfläche (10) abgestreift wird.

2. Verfahren nach Anspruch 1, dadurch gekennzeichnet, daß die pastöse Masse (8) im Flachdruckverfahren, insbesondere im Flachsiebdruckverfahren oder mittels eines Rotationsdruckzylinders, insbesondere aus dem Inneren eines Rotations-Siebdruckzylinders (2) auf eine an diesem entlangbewegte Trägerfläche (10) aufgetragen wird.

3. Verfahren nach Anspruch 2, dadurch gekennzeichnet, daß als Trägerfläche die Oberfläche (10) eines rotierenden Zylinders (4) oder die Oberfläche eines gegebenenfalls von einer Gegendruckwalze (32) unterstützten, fortlaufenden Bandes (30, 46), insbesondere eines Silikon- oder Polytetrafluorethylenbandes verwendet wird.

4. Verfahren nach einem oder mehreren der Ansprüche 1-3, dadurch gekennzeichnet, daß die pastöse Masse nach ihrer zumindest teilweisen Verfestigung auf der Trägerfläche gekühlt wird.

5. Verfahren nach einem oder mehreren der Ansprüche 1-4, dadurch gekennzeichnet, daß die pastöse Masse nach ihrer zumindest teilweisen Verfestigung auf der Trägerfläche bedruckt und erforderlichenfalls nachgetrocknet und gekühlt wird.

6. Verfahren nach einem oder mehreren der Ansprüche 1-5, dadurch gekennzeichnet, daß die pastöse Masse ein Treibmittel enthält.

7. Verfahren nach Anspruch 6, dadurch gekennzeichnet, daß Wärmeenergie in solcher Intensität zugeführt wird, daß ein Ausschäumen der Masse auf der Trägerfläche erfolgt.

8. Verfahren nach einem oder mehreren der Ansprüche 1-7, dadurch gekennzeichnet, daß die pastöse Masse eine Plastisolpaste, eine wasserverdünnbare, mit Füllstoffen hochgefüllte Dispersionspaste, eine Paste auf Silikatbasis bzw. Silikatdispersionsbasis oder eine wasserverdünnbare Dispersionsschaumpaste, beispielsweise eine Acrylatschaumpaste ist.

9. Anlage zum Herstellen von Dekorgranulat in Ausführung des Verfahrens nach einem der Ansprüche 2-8, mit einer Rotationsdruckzylindereinrichtung, insbesondere einer Siebdruckzylindereinrichtung (2, 6), einer Trägereinrichtung (4, 30, 46) mit einer an der Rotationsdruckzylindereinrichtung (2, 6) vorbeibewegbaren Trägerfläche (10) zur Übernahme von pastöser Masse (8) in diskreten Flächenbereichen (26) von der Rotationsdruckzylindereinrichtung (2, 6), einer Zuführeinrichtung (14, 16) für die pastöse Masse (8) aus einem Vorratsbehälter (12) zu der Rotationsdruckzylindereinrichtung (2, 6), einer der Trägereinrichtung zugeordneten Heizeinrichtung (18, 36) zur zumindest teilweisen Verfestigung der pastösen Masse (26) auf der Trägerfläche (10) und einer Abstreifeinrichtung (22) zum Abstreifen der Flächenteilchen (28) aus der zumindest teilweise verfestigten Masse von der Trägerfläche (10).

10. Anlage nach Anspruch 9, dadurch gekennzeichnet, daß die Trägereinrichtung ein rotierender Zylinder (4) und die Trägerfläche die gegebenenfalls feinbearbeitete Mantelfläche (10) des Zylinders (4) ist.

11. Anlage nach Anspruch 9, dadurch gekennzeichnet, daß die Trägereinrichtung ein fortlaufendes Band (30, 46) ist, dessen eine Oberfläche die Trägerfläche ist.

12. Anlage nach Anspruch 11, dadurch gekennzeichnet, daß das fortlaufende Band ein endlos umlaufendes, gegebenenfalls mit einer Trägerfläche aus Polytetrafluorethylen oder Silikon versehenes Band ist.

13. Anlage nach Anspruch 11, dadurch gekennzeichnet, daß das fortlaufende Band ein Band (46) mit endlicher Länge, insbesondere ein Silikonpapierband ist, und daß für das Band eine Abwickel- (50) und eine Aufwickeleinrichtung (52) vorgesehen ist.

14. Anlage nach einem oder mehreren der Ansprüche 11-13, dadurch gekennzeichnet, daß das fortlaufende Band (30, 46) im Berührungsbereich mit der Rotationsdruckzylindereinrichtung (2) von einer elastischen Gegendruckwalze (32) unterstützt ist.

15. Anlage nach einem oder mehreren der Ansprüche 11-14, dadurch gekennzeichnet, daß das fortlaufende Band (30, 46) in Laufrichtung gesehen hinter der Rotationsdruckzylindereinrichtung (2) um einen rotierenden Zylinder (4) geführt ist.

16. Anlage nach Anspruch 10 oder 15, dadurch gekennzeichnet, daß die Heizeinrichtung eine im Innern des Zylinders (4) angeordnete Heizung einschließt.

17. Anlage nach einem der Ansprüche 10, 15 oder 16, dadurch gekennzeichnet, daß die Heizeinrichtung eine im Umfangsbereich des Zylinders (4) angeordnete oder nachgeordnete Heizeinrichtung (18, 36), insbesondere eine Strahlungs- oder Konvektionsheizeinrichtung einschließt.

18. Anlage nach Anspruch 16 oder 17, dadurch gekennzeichnet, daß in Laufrichtung hinter der Heizeinrichtung eine Kühleinrichtung vorgesehen ist.

19. Anlage nach einem oder mehreren der Ansprüche 9-18, dadurch gekennzeichnet, daß hinter der Heizeinrichtung und gegebenenfalls der Kühleinrichtung, jedoch vor der Abstreifeinrichtung (22), ein Druckwerk (24) zum Bedrucken der auf der Trägerfläche befindlichen Masse (26) vorgesehen ist, hinter der erforderlichenfalls eine Nachheiz- und/oder Nachkühleinrichtung angeordnet sind.

20. Verwendung des nach dem Verfahren der Ansprüche 1-18 hergestellten Granulats für die Herstellung von Wandbelägen, insbesondere von Tapeten.

## Claims

1. A process for the preparation of decorative granules, characterized in that a paste (8) is applied in discrete surface areas (26) onto a supporting surface (10) by means of a printing form (2), the applied paste being at least partially solidified on said supporting surface by the influence of thermal energy and being stripped from the supporting surface (10) as granules.

2. A process according to claim 1, characterized in that the paste (8) is applied by planography, in particular by screen planography or is applied by means of a rotary printing cylinder, in particular from the inside of a rotary screen printing cylinder (2) onto a supporting surface (10) being moved along the said rotary screen printing cylinder.

3. A process according to claim 2, characterized in that, as the supporting surface, the surface (10) of a rotary cylinder (4) is used or the surface of a continuous band (30, 46), in particular a silicone or a polytetrafluorethylene band being optionally supported by a counter-pressure cylinder (32).

4. A process according to one or several of claims 1 to 3, characterized in that, after having at least partially been solidified on the supporting surface, the paste is cooled down.

5. A process according to one or several of claims 1 to 4, characterized in that, after having at least partially been solidified on the supporting surface, the past is printed and, if necessary, is redried and cooled down.

6. A process according to one or several of claims 1 to 5, characterized in that the paste contains a propellant.

7. A process according to claim 6, characterized in that the thermal energy is supplied at such an intensity that it effects an expansion of the mass on the supplying surface.

8. A process according to one or several of claims 1 to 7, characterized in that the paste is a plastisolpaste, a dispersive paste being dilutable by water and filled with filling material at a high portion, a paste on the basis of silicate dispersion respectively or a dispersion foam paste being dilutable by water, e.g. an acrylate foam paste.

9. Apparatus for the preparation of decorative granules to perfom the process according to one of claims 2 to 8, comprising a rotary printing cylinder device, in particular a screen printing cylinder device (2, 6), a supporting device (4, 30, 46) comprising the supporting surface (10) movable past the rotary printing cylinder device (2, 6) to take delivery of the paste 8 in discrete surface areas (26) from the rotary printing cylinder device (2, 6), a feeder (14, 16) for the paste (8) from a store tank (12) to the rotary printing cylinder device (2, 6), a heating device (18, 36) attributed to the supporting device in order to at least partially solidify the paste (26) on the supporting surface (10) and a stripping device (22) to strip the flat particles (28) of the at least partially solidified mass from the supporting surface (10).

10. Apparatus according to claim 9, characterized in that the supporting device is a rotary cylinder (4) and the supporting surface is the surface areas (10) of the cylinder (4) being finished if necessary.

11. Apparatus according to claim 9, characterized in that the supporting device is a continuous band (30, 46) the surfaces therefrom being the one of supporting surface.

12. Apparatus according to claim 11, characterized in that the continuous band is an endless loop provided with a supporting surface of polytetrafluorethylene or silicone, if necessary.

13. Apparatus according to claim 11, characterized in that the continuous band is a band (46) having a finite length, particularly a band of silicone paper, and in that a take-off (50) and a take-up unit (52) is provided for the band.

14. Apparatus according to one or several of claims 11 to 13, characterized in that the continuous band (30, 46) is supported by an elastic counter-pressure cylinder (32) in the contacting area of the rotatory printing cylinder device (2).

15. Apparatus according to one or several of claims 11 to 14, characterized in that, with respect to its moving direction, behind the rotary printing cylinder device (2), the continuous band (30, 46) is led around a rotary cylinder (4).

16. Apparatus according to claims 10 or 15, characterized in that the heating device comprises a heating positioned inside the cylinder (4).

17. Apparatus according to one of claims 10, 15 or 16, characterized in that the heating device comprises a heating installation (18, 36), in particular a radiant or convective heating installation being arranged in or postpositioned at the circumferential area of the cylinder (4).

18. Apparatus according to claims 16 or 17, characterized in that, as regards the moving direction, a cooling device is provided after the heating device.

19. Apparatus according to one or several of claims 9 to 18, characterized in that, in order to print the mass (26) situated upon the supporting surface, a printing unit (44) is provided after the heating device and optionally after the cooling device but before the stripping device (22) after which printing unit a post-heating and/or post-cooling device is arranged, if necessary.

20. Use of the granules made according to the process of claims 1 to 8 for the manufacture of wall coverings, in particular of wall papers.

## Revendications

1. Procédé pour la fabrication de granules decoratifs, caractérisé en ce que l'on étend une masse pâteuse (8) dans de domaines superficieux discrèts (26) sur une surface support (10) par moyen d'un châssis d'imprimerie (2), ladite masse étant consolidée au moins partiellement sur ladite surface support par l'influence d'énergie thermique et étant ôtée (28) de la surface support (10) en tant que granules.

2. Procédé selon la revendication 1, caractérisé en ce que l'on étend ladite masse pâteuse (8) par impression planographique, en particulier par la sérigraphie plane ou par moyen d'un cylindre rotatif à imprimer, en particulier depuis l'intérieur d'un cylindre rotatif de sérigraphie (2), sur une surface support (10) conduite le long dudit cylindre rotatif de sérigraphie.

3. Procédé selon la revendication 1, caractérisé en ce que, en tant que surface support, on utilise la surface d'un cylindre rotatif (4) ou la surface d'une bande continue (30, 46) qui, le cas échéant, est supportée par un cylindre à contre-pression (32), notamment d'une bande de silicone ou de polytétrafluoréthylène.

4. Procédé selon une ou plusieurs des revendications 1 à 3, caractérisé en ce que, après sa consolidation au moins partielle sur la surface support, on fait refroidir la masse pâteuse.

5. Procédé selon une ou plusieurs des revendications 1 à 4, caractérisé en ce que, après sa consolidation au moins partielle sur la surface support, on imprime la masse pâteuse et, en cas de besoin, on la résèche et on la refroidit.

6. Procédé selon une ou plusieurs des revendications 1 à 5, caractérisé en ce que la masse pâteuse contient un propulseur.

7. Procédé selon la revendication 6, caractérisé en ce que l'on alimente de l'énergie thermique de telle intensité qu'une distribution par moussage de la masse est effectuée sur la surface support.

8. Procédé selon une ou plusieures des revendications 1 à 7, caractérisé en ce que la masse pâteuse est représentée par une pâte de dispersion fortement enrichie de matière de charge, par une pâte se fondant sur le silicate ou sur une dispersion de silicate respectivement, ou par une pâte de mousse de dispersion diluable avec de l'eau, par exemple par une pâte de mousse d'acrylate.

9. Dispositif pour la fabrication de granules déroratifs, réalisant le procédé d'après une des revendications 2 à 8, comportant un dispositif de cylindre rotatif à imprimer, en particulier un dispositif de cylindre de sérigraphie (2, 6), un dispositif support (4, 30, 46) avec une surface support (10) que l'on peut conduire devant le dispositif de cylindre rotatif à imprimer (2, 6) pour embarquer la masse pâteuse (8) du dispositif de cylindre rotatif à imprimer (2, 6) sur de domaines superficieux discrèts, un dispositif d'alimentation (14, 16) pour la masse pâteuse d'un réservoir de stockage (12) au dispositif de cylindre rotatif à imprimer (2, 6), une installation de chauffage (18,36) attribuée au dispositif support pour consolider la masse pâteuse (26) au moins partiellement sur la surface (10) et un dispositif de stripage (22) pour enlever les particules plates (28) de masse consolidée au moins particulièrement de la surface support (10).

10. Dispositif selon la revendication 9, caractérisé en ce que le dispositif support est un cylindre rotatif (4) et la surface support est la surface latérale (10) dudit cylindre (4) dont, le cas échéant, ladite surface latérale est usinée fin.

11. Dispositif selon la revendication 9, caractérisé en ce que le dispositif support est une bande continue (30, 46) dont une des surfaces est la surface support.

12. Dispositif selon la revendication 11, caractérisé en ce que la bande continue est une bande sans fin tournante et, le cas échéant, ladite bande continue est munie d'une surface support de polytétrafluoréthylène ou de silicone.

13. Dispositif selon la revendication 11, caractérisé en ce que la bande continue est une bande à bout libre (46), en particulier une bande de papier silicone, et que, pour la bande, on a prévu un dispositif à dérouler (50) et à enrouler (52).

14. Dispositif selon une ou plusieurs des revendications 11 à 13, caractérisé en ce que, à la zone de contact avec le dispositif de cylindre rotatif à imprimer (2), la bande continue (30, 46) est supportée d'un cylindre à contre-pression élastique (32).

15. Dispositif selon une ou plusieurs des revendications 11 à 14, caractérisé en ce que, relativement au sens de son mouvement, la bande continue (30, 46), est conduit derrière le dispositif de cylindre rotatif à imprimer (2) autours d'un cylindre rotatif (4).

16. Dispositif selon les revendications 10 ou 15, caractérisé en ce que l'installation de chauffage comporte un chauffage installée à l'intérieur du cylindre (4).

17. Dispositif selon une des revendications 10, 15 ou 16, caractérisé en ce que l'installation de chauffage comporte un dispositif de chauffage (18, 36) installée à la domaine périphérique du cylindre (4) ou là-derrière, en particulier une dispositif de chauffage à rayonnement ou par convection.

18. Dispositif selon la revendication 16 ou 17, caractérisé en ce que, après l'installation de chauffage, au sens de son mouvement, on a prévu une installation de refroidissement.

19. Dispositif selon une ou plusieurs des revendications 8 à 18, caractérisé en ce qu'après l'installation de chaufffage ou selon le cas de refroidissement, mais avant le dispositif de stripage (22), on a prévu un groupe d'impression (24) pour imprimer la masse (26) située sur la surface support, après lequel, en cas de besoin, une dispositif de réchauffage et/ou de refroisissement supplémentaire est installée.

20. Utilisation des granules fabriqués selon le procédé des revendications 1 à 8 pour la fabrication de revêtements murales , en particulier de tentures.

FIG. 1

FIG. 2

EP 0 333 031 B1

FIG. 3